(19) Europäisches Patentamt
European Patent Office
Office européen des brevets

(11) Veröffentlichungsnummer: **0 047 228**
**B1**

# (12) EUROPÄISCHE PATENTSCHRIFT

(45) Veröffentlichungstag der Patentschrift: **16.01.85**

(51) Int. Cl.⁴: **C 08 G 73/06**, C 07 D 227/087, C 07 C 87/14, C 07 C 87/34, C 07 D 251/70, C 07 D 223/10

(21) Anmeldenummer: **81810346.7**

(22) Anmeldetag: **24.08.81**

(54) **Gemische zur Herstellung von stickstoffhaltigen Polyaddukten.**

(30) Priorität: **28.08.80 CH 6484/80**

(43) Veröffentlichungstag der Anmeldung: **10.03.82 Patentblatt 82/10**

(45) Bekanntmachung des Hinweises auf die Patenterteilung: **16.01.85 Patentblatt 85/3**

(84) Benannte Vertragsstaaten: **DE FR GB NL**

(56) Entgegenhaltungen:
**DE - A - 1 905 098**
**DE - B - 1 261 671**
**GB - A - 1 453 105**
**US - A - 3 308 101**

(73) Patentinhaber: **CIBA-GEIGY AG, Postfach, CH-4002 Basel (CH)**

(72) Erfinder: **Lohse, Friedrich, Prof. Dr., Buchenstrasse 23, CH-4104 Oberwil (CH)**
Erfinder: **Trachsler, Dieter, Dr., Liebrütistrasse 21/15, CH-4303 Kaiseraugst (CH)**
Erfinder: **Jeannerat, Claude, 32 Rue Longue, CH-68220 Hegenheim (CH)**

**EP 0 047 228 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Gemisch zur Herstellung von neuen vernetzten stickstoffhaltigen Polyaddukten. Das Gemisch enthält eine organische Verbindung mit mindestens 2 C-Atomen und mindestens 2 Amino-Gruppen oder mit mindestens einer Amino- und einer Hydroxyl-Gruppe und ein N-Cyanlactam.

Aus der DE-OS 2 533 119 ist es bekannt, hochmolekulare Polytriazine dadurch herzustellen, dass man di- und polyfunktionelle aromatische Cyanamide mit di- und polyfunktionellen aromatischen Cyanaten bei erhöhter Temperatur umsetzt. Analogerweise erhätl man substituierte Polytriazine durch die Umsetzung von aromatischen Cyanaten mit aromatischen N-Cyansulfonamiden, wie in DE-OS 2 533 126 beschrieben ist, oder durch Polyaddition von N-Cyanamidaryl-cyanaten. Die US-Patente 4 049 711, 3 944 526 und 4 075 185 beschreiben die Polyaddition von Cyanamidgruppen an N-Cyansulfonamidgruppen.

Es ist ferner aus der DE-OS 2 533 121 bekannt, hochmolekulare Polytriazine dadurch herzustellen, dass man hydroxy- und amingruppenhaltige aromatische Verbindungen mit Halogencyan umsetzt und anschliessend thermisch behandelt.

DE-OS 2 546 337 beschreibt Polytriazine, die durch Kondensation von Hydroxyl- und Aminogruppen enthaltenden Verbindungen mit Cyanurchlorid und anschliessende stufenweise Umsetzung der Reaktionsprodukte mit Di- oder Polyphenolen und Halogencyan erhalten werden. In der DE-OS 2 546 315 werden zur Herstellung ähnlicher Polytriazine anstelle von Di- oder Polyphenolen Di- oder Polyamine verwendet. In der DE-OS 2 546 270 wiederum werden die Polytriazine durch Kondensation von Cyanurchlorid mit primäre und sekundäre Aminogruppen enthaltenden Phenolen und anschliessende Umsetzung der Reaktionsprodukte mit Halogencyan erhalten.

Weiterhin ist die Homo- und Copolymerisation von Alkylendicyanamiden in der US-PS 3 291 673 beschrieben. Man erhält harte, farblose und transparente Polymere, deren Struktur nicht näher beschrieben wird.

Es ist aus der US-PS 3 308 101 bekannt, dass die Umsetzung von Monocyanamiden mit Biscyanamiden zu vernetzten Polymer mit wiederkehrenden Melaminstruktureinheiten führt.

Weiterhin ist die Herstellung von substituierten Polyaminen durch die Polyaddition von Bis-cyanamiden sekundärer Alkylendiamine durch thermische Behandlung in der US-PS 3 779 997 beschrieben.

Ferner ist bekannt, dass N-Cyanlactame wirksame Polymerisationskatalysatoren sind, z.B. für die anionische Polymerisation von α-Pyrrolidon (DE-AS 1 261 671) oder bei der Herstellung von Polyamiden (DE-OS 1 905 098).

Es wurde nun gefunden, dass sich N-Cyanlactame als additionsfähige Polymerisationskomponenten zur Herstellung von vernetzten Polyaddukten eignen.

Gegenstand der vorliegenden Erfindung ist daher ein Gemisch zur Herstellung von vernetzten stickstoffhaltigen Polyaddukten, das dadurch gekennzeichnet ist, dass es

a) ein N-Cyanlactam der Formel I oder II

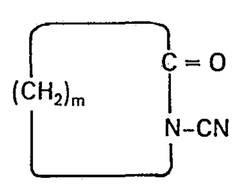

(I)

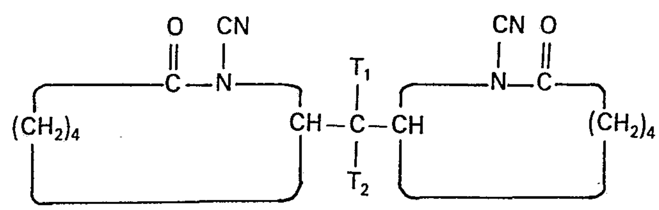

(II),

worin m eine ganze Zahl von 2 bis 11 bedeutet, die Methylen-Kohlenstoffatome gegebenenfalls durch insgesamt eine oder zwei Methyl- oder Äthyl-Gruppen substituiert sind, und $T_1$ und $T_2$ unabhängig voneinander Wasserstoff oder Methyl bedeuten, und

b) eine monomere oder oligomere organische Verbindung mit mindestens 2 C-Atomen und mindestens 2 Aminogruppen oder mit mindestens einer Amino- und einer Hydroxyl-Gruppe enthält.

Eine Vorzugsform der Erfindung stellen Gemische dar, in welchen die Komponente b) in solchen Mengen vorliegt, dass auf 1 Mol a) 0,2 bis 3,0 Aminäquivalente der Komponente b) fallen.

Geeignete Verbindungen der Formel I sind z.B. N-Cyanpyrrolidon, N-Cyanpiperidon, N-Cyancaprolactam, N-Cyancapryllactam, N-Cyanoenanthlactam, N-Cyancaprinlactam, N-Cyanlaurinlactam, N-Cyan-ε-methylcaprolactam oder N-Cyan-ε-äthylcaprolactam.

Bevorzugt ist m eine ganze Zahl von 3 bis 5.

$T_1$ und $T_2$ sind in den Verbindungen der Formel II bevorzugt Wasserstoff.

Als Komponente b) können die folgenden organischen Verbindungen verwendet werden:

A. Diamine

Monomere und oligomere Verbindungen, welche diprimäre, primärsekundäre oder disekundäre Aminogruppen enthalten.

1. Primäre Diamine der Formel III

$$NH_2\text{-}R_1\text{-}NH_2 \qquad \text{(III)},$$

worin $R_1$ eine Gruppe $C_nH_{2n}$ ist, welche gegebenenfalls mit O-Brücken unterbrochen sein kann und worin n 2–12 bedeutet, $C_5$–$C_7$ Cycloalkylen, welches gegebenenfalls mit einer oder zwei $C_1$–$C_4$ Akylgruppen substituiert ist, Phenylen oder eine der Gruppen

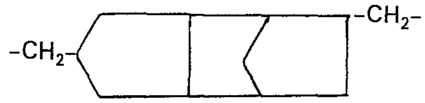

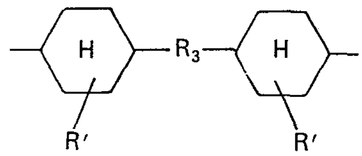

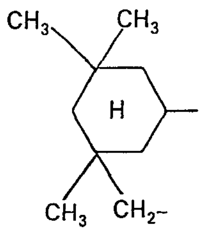

;

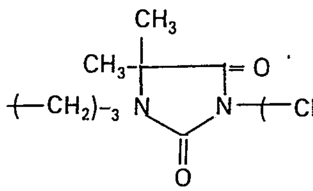

;

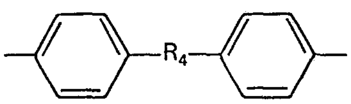

oder

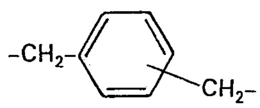

ist,

wobei $R_3$ $-CH_2-$ oder 2,2-Propylen und R′ Wasserstoff oder Methyl bedeuten, und $R_4$ für $-CH_2-$, 2,2-Propylen, $-SO_2-$, -O- oder für -NH-CO-NHsteht.

Beispiele für Verbindungen der Formel III sind: Äthylendiamin, 1,2-Diaminopropan, 1,3-Diaminopropan, 1,4-Diaminobutan, 1,6-Diaminohexan, 2,2,4-Trimethylhexamethylendiamin, Neopentandiamin, 1,2-Bis-(γ-aminopropyloxy)-äthan, 1,2-Bis-(γ-aminopropyloxy)-propan, 1,2-Diamino-cyclohexan, 1,3-Diamino-cyclohexan, 1,4-Diaminocyclohexan, 1,4-Diamino-3,6-diäthylcyclohexan, 4,4′-Diamino-dicyclohexylmethan, 2,2-(4′,4″-Diamino-dicyclohexyl)-propan, 3,5,5-Trimethyl-3-aminomethyl-cyclohexylamin-(Isophorondiamin), 3,3′-Dimethyl-4,4′-diamino-dicyclohexylmethan, 3,8-Diaminomethyl-tricyclo[5.2.1.0$^{2,6}$]-decan, o-Phenylendiamin, m-Phenylendiamin, p-Phenylendiamin, 4,4′-Diamino-diphenylmethan, 2,2-Bis(p-aminophenyl)-propan, 4,4′-Diamino-diphenylsulfon, 4,4′-Diaminodiphenyläther, 4,4′-Diaminodiphenylharnstoff, 2,2′-Diamino-diphenylmethan, o-Xylylendiamin, m-Xylylendiamin, p-Xylylendiamin oder 1,3-Bis-(γ-aminopropyl)-5,5-dimethylhydantoin.

2. Amidgruppenhaltige primäre Diamine der Formel IV:

$$NH_2-(CH_2)_p-CO-NH-R_2-NH_2 \quad (IV),$$

worin $R_2$ eine Gruppe $C_qH_{2q}$ ist, wobei q eine Zahl von 2 bis 6 bedeutet und p für eine Zahl von 3 oder 5 steht.

Beispiele für Verbindungen der Formel IV sind: N-(2-Aminoäthyl)-γ-aminobuttersäureamid und N-(6-Aminohexyl)-ε-aminocapronsäureamid.

3. Verbindungen der Formel V, welche durch Anlagerung von Pyrrolidon oder Caprolactam an Diamine der Formel $NH_2-R_2-NH_2$ entstehen,

$$H-[NH-(CH_2)_p-CO]_x-NH-R_2-NH-[CO-(CH_2)_p-NH]_y-H \quad (V),$$

worin $R_2$ und p die bereits genannten Bedeutungen haben und die Summe von x + y gleich 1–20 ist.

4. Polyamide der Formel VI

$$NH_2-R_2-NH-[CO-R_5-CO-NH-R_2-NH]_z-CO-R_5-CO-NH-R_2-NH_2 \quad (VI),$$

worin $R_2$ die genannte Bedeutung hat, $R_5$ eine Gruppe $-(CH_2)_r-$, 1,3- oder 1,4-Phenylen bedeutet, wobei r eine Zahl von 3 bis 12 ist und z eine Zahl von 1 bis 20 bedeutet.

5. Sekundäre Diamine der Formeln VII-IX

$$R_6-NH-R_8-NH-R_7 \quad (VII)$$

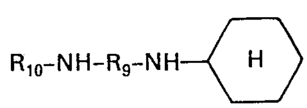

(VIII)

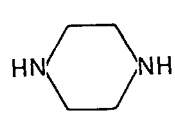

(IX),

worin $R_6$ und $R_7$ gleich oder verschieden sind und einen $C_1$–$C_4$ Alkylrest bedeuten und $R_8$ Cyclohexylen oder die Gruppe

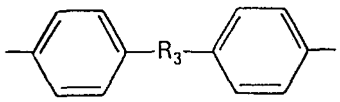

bedeutet, worin $R_3$ die unter 1) genannte Bedeutung hat, $R_9$ eine Gruppe $-(CH_2)_q$ ist, wobei q eine Zahl von 2 bis 6 bedeutet, und $R_{10}$ für Wasserstoff oder Cyclohexyl steht.

Beispiele für sekundäre Diamine sind:

N,N′-Dimethyl-1,4-diaminocyclohexan,
N,N′-Diäthyl-1,4-diaminocyclohexan,
4,4′-Di-(N-methylamino)-diphenylmethan,
4,4′-Di-(N-äthylamino)-diphenylmethan,
4,4′-Di-(butylamino)-diphenylmethan N-(γ-Aminopropyl)-cyclohexylamin N,N′-Dicyclohexyl-1,6-diaminohexan.

6. Diamine, welche endständige Aminogruppen enthaltende Copolymerisate auf der Basis von Polybutadien und Acrylnitril sind und ein durchschnittliches Molgewicht von 3000 bis 4000 haben.

7. Polyätheramine, welche durch Umsetzung von Polyäthylen- oder Polypropylenglykolen mit Ammoniak gewonnen werden können und ein durchschnittliches Molgewicht von 200–2200 besitzen, insbesondere α,ω-Diaminopolypropylenglykole.

B. Polyamine

Verbindungen, die mehr als zwei primäre und/oder sekundäre Aminogruppen besitzen:

1. Polyamine der Formel X, die durch Reduktion von Acrylnitril-Anlagerungsprodukten an Tri- und Tetrahydroxyverbindungen gewonnen werden können

$$R_o\text{-}(\text{-}O\text{-}CH_2CH_2CH_2\text{-}NH_2)_r \qquad (X),$$

worin $R_o$ ein r-wertiger gesättigter, geradkettiger oder verzweigter aliphatischer Rest mit 3 bis 6 C-Atomen ist und r 3 oder 4 bedeutet.

Beispiele für Verbindungen der Formel X sind:
1,1,1-Tris-(γ-aminopropyloxymethyl)-äthan
1,1,1-Tris-(γ-aminopropyloxymethyl)-propan
Tetra-(γ-aminopropyloxymethyl)-methan
1,2,6-Tris-(γ-aminopropyloxy)-hexan.

2. Polyamine, die durch Umsetzung eines Gemisches dimerisierter und oligomerisierter Linolsäure oder Ricinolsäure mit Diäthylentriamin, Triäthylentetramin etc., wie sie unter der Handelsbezeichnung «Versamide» der Firma Schering AG erhältlich sind, entstehen.

3. Polyamine der Formel XI

$$NH_2-R_{14}-NH_2 \qquad (XI),$$

worin $R_{14}$ eine Gruppe

$$\text{-}[\text{-}CH_2CH_2\text{-}NH\text{-}]_v\text{-}CH_2CH_2\text{-},$$

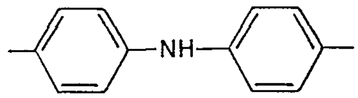 oder

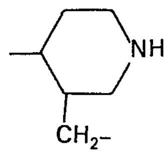

ist, wobei v eine Zahl von 1 bis 3 bedeutet.

C. Hydroxylgruppenhaltige Amine der Formel XII

$$NH_2\text{-}R_{11}\text{-}OH, \qquad (XII),$$

worin $R_{11}$ eine Gruppe $C_tH_{2t}$ bedeutet, welche gegebenenfalls mit O- und/oder N-Brücken unterbrochen ist und worin t eine Zahl von 2 bis 12 ist.

Beispiele für Verbindungen der Formel XII sind: Äthanolamin, 3-Propanolamin, 2-(β-Hydroxyäthoxy)-äthylamin, Anlagerungsprodukte von 1 Mol Äthylenoxid oder Propylenoxid pro Aminogruppe an Di- und Polyamine, wie z.B. 2-Hydroxyäthyl-äthylendiamin, 2-Hydroxyäthyl-1,3-propylendiamin, N-(2-Hydroxyäthyl)-diäthylentriamin oder N,N′-Bis(2-hydroxyäthyl)-triäthylentetramin.

Als Komponente b) können auch Gemische der genannten Verbindungen eingesetzt werden.

Bevorzugte Komponenten b) sind Verbindungen der Formel III, worin $R_1$ eine Gruppe $C_nH_{2n}$ ist, wobei n eine Zahl von 2 bis 12 bedeutet, oder $C_5$–$C_7$ Cycloalkylen ist, oder Verbindungen der Formel VIII, worin $R_9$ eine Gruppe $-(CH_2)_q-$ ist, wobei q eine Zahl von 2 bis 6 bedeutet und $R_{10}$ für Wasserstoff oder Cyclohexyl steht.

Besonders bevorzugt sind Äthylendiamin, 1,2-Diaminopropan, 1,4-Diaminobutan, 1,6-Diaminohexan, 2,2,4-Trimethylhexamethylendiamin, 4,4′-Diaminodicyclohexylmethan, N-(γ-Aminopropyl)-cyclohexylamin oder Isophorondiamin.

Weiterhin bevorzugt sind Gemische, bei denen bis zu 30 Mol % der Aminäquivalente der Komponente b) durch c) eine Monoaminoverbindung der Formel

$R_{12}$-NH-$R_{13}$ oder 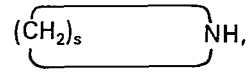

worin $R_{12}$ ein geradkettiges oder verzweigtes $C_2$–$C_{16}$ Alkyl, Allyl, $C_5$–$C_6$ Cycloalkyl, Phenyl, Benzyl oder Furfuryl ist, $R_{13}$ Wasserstoff, $C_1$–$C_4$ Alkyl oder Allyl bedeutet, und s eine ganze Zahl von 5 bis 7 ist, ersetzt sind.

Eine weitere Vorzugsform der Erfindung stellen Gemische dar, in welchen die Komponenten b) und c) in solchen Mengen vorliegen, dass auf 1

Mol a) 0,2 bis 3,0 Aminäquivalente der Komponenten b) und c) fallen.

Bedeutet $R_{12}$ in der obigen Formel $C_2$–$C_{16}$ Alkyl, so kann es beispielsweise Äthyl, Isopropyl, n-Butyl, n-Hexyl, 2-Äthylhexyl, n-Dodecyl oder n-Hexadecyl sein.

Bedeutet $R_{12}$ $C_5$–$C_6$ Cycloalkyl, so kann es beispielsweise Cyclopentyl oder insbesondere Cyclohexyl sein.

Bedeutet $R_{13}$ $C_1$–$C_4$ Alkyl, so kann es beispielsweise Methyl, Äthyl, Isopropyl, sec.-Butyl oder insbesondere n-Butyl sein.

Beispiele für Komponenten c) sind:

n-Butylamin, n-Hexylamin, 2-Äthylhexylamin, n-Dodecylamin, n-Hexadecylamin, Cyclohexylamin, Benzylamin, Anilin, Furfurylamin, Di-n-butylamin, Diallylamin, N-Methyl-cyclohexylamin, Pyrrolidin, Piperidin und Hexamethylenimin.

Bevorzugte Monoaminoverbindungen c) sind n- Butylamin, Di-n-butylamin, Benzylamin, Anilin und Toluidin.

Die erfindungsgemässen Gemische können definitionsgemäss zur Herstellung von neuen vernetzte stickstoffhaltigen Polyaddukten verwendet werden, welche unschmelzbare, unlösliche hochmolekulare Stoffe sind. Gegenstand der Erfindung sind auch neue vernetzte stickstoffhaltige Polyaddukte, die dadurch erhalten werden, dass man das erfindungsgemässe Gemisch zur Reaktion bringt.

Die Polyadditionsreaktion kann bei 0°C bis +300°C, vorzugsweise bei +20°C bis +250°C, erfolgen.

Durch den Zusatz der Komponente c) kann die Flexibilität der vernetzten Formkörper erhöht werden. Ferner kann es aus arbeitstechnischen Gründen wünschenswert sein, die Viskosität der zu verarbeitenden Harzmischung durch die Komponente c) herabzusetzen.

N-Cyanlactame reagieren mit Di- und Polyaminoverbindungen bzw. Aminoalkoholen unter Bildung von cyclischen und linearen Tri- und Oligomerisationsprodukten. Die Addition der Aminogruppe an das N-Cyanlactam erfolgt unter Ausbildung von Amidgruppen, während bei der Addition von Aminoalkoholen an das N-Cyanlactam Amid- und Estergruppen entstehen. Dabei wird die hochreaktive Cyanamidgruppe intermediär freigesetzt. Der Reaktionsablauf kann durch das folgende Schema illustriert werden:

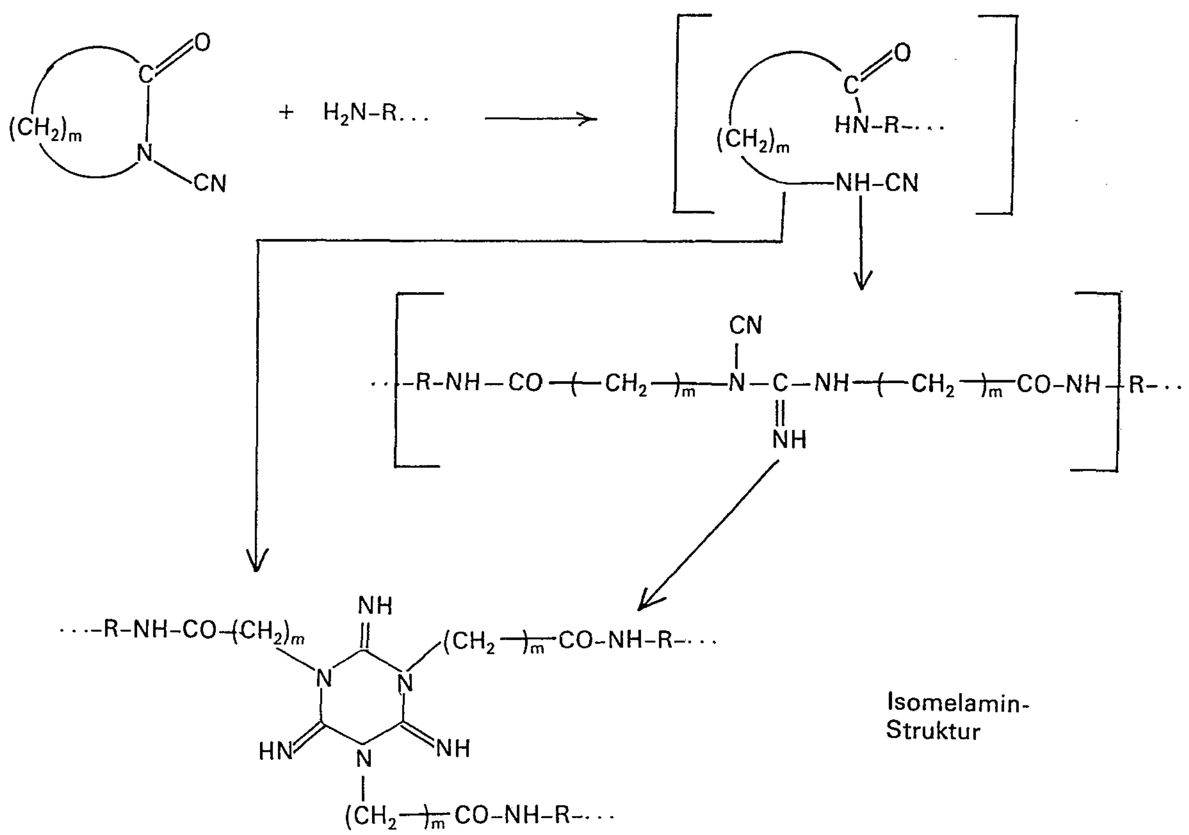

Isomelamin-Struktur

und

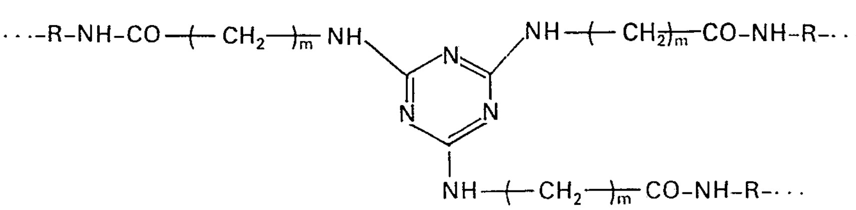

Melamin-Struktur,

worin R den organischen Rest der Komponente b) bedeutet.

An der Bildung der vernetzten Polyaddukte sind lineare Oligomerisationsprodukte sowie Isomelamin- und Melaminstrukturen beteiligt.

Die Polyaddition kann gegebenenfalls in Gegenwart eines Katalysators erfolgen. Geeignete Katalysatoren sind z.B. tertiäre Amine, wie Triäthylamin oder Benzyldimethylamin, Pyridin und substituierte Pyridinderivate, wie z.B. 4-Dimethylaminopyridin, 4-Pyrrolidino-pyridin, Alkalialkoholate, wie z.B. Natriumhexylat, Imidazole, wie z.B. 2-Äthyl-4-methyl-imidazol, quaternäre Ammoniumsalze, wie z.B. Tetramethylammoniumchlorid oder Benzyltrimethylammoniumchlorid, Lewis-Säuren, wie z.B. Zinn-II-chlorid, Lithiumchlorid, ferner auch Bortrifluorid-ätherat oder N-p-Chlorphenyl-N',N'-dimethylharnstoff. Die katalytisch wirksamen tertiären Aminogruppen können auch in die Komponente b) eingebaut sein, wie z.B. N,N-Dimethyl-1,2-diaminopropan oder 1-(γ-Aminopropyl)-piperazin.

Die Katalysatoren können in Mengen von 0,1 bis 5 Gew.-%, vorzugsweise 0,1 bis 2 Gew.-%, bezogen auf das Reaktionsgemisch, eingesetzt werden.

Die Ausgangsverbindungen der Formel I und II können nach dem in den DE-OS 1 905 098 oder 1 175 678 beschriebenen Verfahren hergestellt werden. Sie zeichnen sich durch gute Lagerstabilität selbst bei erhöhter Temperatur aus.

Die Aminverbindungen der Komponente b) und c) sind im Handel erhältlich oder können nach bekannten Methoden auf einfache Weise hergestellt werden.

Die erfindungsgemässen Mischungen können als Giessharze, Klebstoffe oder Schaumstoffe verwendet werden. Sie können auch auf Unterlagen wie Holz, Glas, Textilien, Metall, Tonwaren, zu Überzügen verarbeitet und vor der Verarbeitung mit Füllstoffen, wie Aktivkohle, Russ, Holzmehl, Kieselgur, Pigmenten, Glasfasern oder Metallpulvern, versetzt werden.

Die folgenden Beispiele erläutern die Erfindung.

Beispiele

Die Prüfung der Harzsysteme erfolgt durch Torsionsklebefestigkeitsversuche. Zu diesem Zweck werden das N-Cyanlactam und eine äquivalente Menge der Aminverbindung (1 Äquivalent $NH_2$ pro Mol Cyanlactam) gemischt, wobei bei Raumtemperatur oder gegebenenfalls erhöhter Temperatur mehr oder weniger viskose, homogene Gemische entstehen. Den Gemischen werden in einigen Fällen katalytische Mengen eines Katalysators zugegeben.

Zur Messung der Torsionsklebefestigkeit werden 5 Hohlzylinder (Aussendurchmesser 12 mm) aus Aluminium mit der zu prüfenden Harzmischung auf eine kräftige Aluminiumplatte geklebt, wobei die Klebeflächen des Zylinders sowie der Platte zuvor nach dem Pickling-Verfahren (1 Std. Chromschwefelsäure bei 60°C) gereinigt und behandelt werden. Anschliessend werden die Testproben unterschiedlichen Härtungszeiten und -temperaturen unterworfen. Nach Abkühlung auf Raumtemperatur wird mittels eines Sechskantrohres ein stetig zunehmendes Torsionsmoment auf die Hohlzylinder ausgeübt. Über einen Hebelarm wird das Drehmoment, welches die Verklebung belastet, von einem Kraftaufnehmer gemessen und elektrisch registriert. Die Schubspannung in der Klebstoffschicht wächst dann bis zum Bruch, wobei die zum Bruch aufzuwendende Kraft in $Nmm^{-2}$ registriert wird.

Beispiel 1

N-Cyanpyrrolidon und 1,6-Diaminohexan werden im Molverhältnis 2:1 gemischt und bei verschiedenen Temperaturen gehärtet. Die Messung der Torsionsklebefestigkeit ergab:
Gehärtet 1 Std. bei 100°C: 90,0 $Nmm^{-2}$
Gehärtet 1 Std. bei 140°C: 103,9 $Nmm^{-2}$
Gehärtet 1 Std. bei 180°C: 98,1 $Nmm^{-2}$
Gehärtet 5 Std. bei 140°C: 108,2 $Nmm^{-2}$.

Beispiel 2

N-Cyanpiperidon und 1,6-Diaminohexan werden im Molverhältnis 2:1 gemischt und bei verschiedenen Temperaturen gehärtet. Die Messung der Torsionsklebefestigkeit ergab:
Gehärtet 1 Std. bei 100°C: 56,1 $Nmm^{-2}$
Gehärtet 1 Std. bei 140°C: 74,3 $Nmm^{-2}$.

Beispiel 3

N-Cyancaprolactam und 1,6-Diaminohexan werden im Molverhältnis 2:1 gemischt und bei verschiedenen Temperaturen gehärtet. Die Messung der Torsionsklebefestigkeit ergab:
Gehärtet 1 Std. bei 100°C: 57 $Nmm^{-2}$
Gehärtet 1 Std. bei 140°C: 79 $Nmm^{-2}$
Gehärtet 1 Std. bei 180°C: 82 $Nmm^{-2}$
Gehärtet 5 Std. bei 140°C: 83 $Nmm^{-2}$.

Beispiele 4–6

Prüfung der Polyaddukte anhand von Filmen. Zur Herstellung der Filme werden folgende Mischungen zubereitet:

4. 3,40 g (0,02 Mol) Isophorondiamin und 5,52 g (0,04 Mol) N-Cyancaprolactam werden bei einer Temperatur von 25°C vermischt. Die Gelierzeiten betragen 29 Minuten bei 100°C und 5 Minuten 25 Sekunden bei 140°C.

5. 2,32 g (0,02 Mol) 1,6-Diaminohexan und 5,52 g (0,04 Mol) N-Cyancaprolactam werden bei einer Temperatur von 40°C vermischt. Die Gelierzeiten betragen 4 Minuten bei 100°C und 2 Minuten bei 120°C.

6. 3,96 g (0,02 Mol) 4,4'-Diamino-diphenylmethan und 5,52 g (0,04 Mol) N-Cyancaprolactam werden bei einer Temperatur von 75°C vermischt. Die Gelierzeit beträgt 2 Stunden 54 Minuten bei 140°C.

Alle Mischungen stellen schwach gelb gefärbte relativ niederviskose Flüssigkeiten dar.

Die Mischungen werden ohne Lösungsmittel,

mit Hilfe eines Vierfach-Filmziehrahmens (Typ 360) in 200 µm starker Schicht auf ein Eisenblech mit den Abmessungen von 350 × 70 × 0,6 mm aufgebracht, wobei das Eisenblech vorher mit Aceton entfettet wurde. Die Filmproben werden unter den in der Tabelle angegebenen Bedingungen gehärtet.

In der Tabelle sind die folgenden Prüfwerte zusammengefasst:

E = Tiefziehfähigkeit nach Erichsen (DIN 53156), gemessen bei 20°C und 65% relativer Feuchtigkeit (RF). Angabe in mm.

D = Dornbiegetest (DIN 53152). Der Dorndurchmesser beträgt 15 mm. Angabe in ∢°.

RJ = Reverse Impacttest, wobei der Schlag auf das Substrat (Eisenblech) mit einem 1 kg schweren Prüfhammer erfolgt. Der Durchmesser der aufschlagenden Halbkugel beträgt 2 cm. Prüftemperatur: 20°C bei 65% RF.

**Tabelle**

| Beispiel | Härtungsbedingungen Zeit | Temperatur | E (mm) | D ∢° | RJ |
|---|---|---|---|---|---|
| 4 | 1 Stunde | 120°C | 4,6 | 80 | 10/1 |
| 5 | 1 Stunde | 120°C | 10 | 180 | 100/2 |
| 6 | 3 Stunden + 6 Stunden | 120°C 180°C | 1,1 | 115 | 15/1 |
| 5 | 3 Tage | 25°C | 10 | 180 | 100/2 |

Beispiel 7

Prüfung der Polyaddukte anhand von Giessplatten

Zur Herstellung einer Giessplatte im Format 200 × 200 × 4 mm aus N-Cyancaprolactam und Isophorondiamin im Molverhältnis von etwa 2:1 werden 123,6 g (0,89 Mol) N-Cyancaprolactam (95%ig) und 72,4 g (0,43 Mol) Isophorondiamin in einem Becherglas bei Raumtemperatur gemischt. Die Mischung wird sofort kurz im Hochvakuum bei 1,333 Pa entgast. Unmittelbar darauf wird die Mischung in eine mit einem handelsüblichen Trennmittel auf der Basis von Silikonöl vorbehandelte Form gegossen. Die gefüllte Form wird bei Raumtemperatur während 10 Minuten stehen gelassen, dann wird sie in einem Ofen während 30 Minuten von Raumtemperatur auf 180°C erwärmt und eine weitere Stunde auf 180°C gehalten.

Es werden schwach gelbliche transparente Formplatten mit folgenden Eigenschaften erhalten:

| | |
|---|---|
| Biegefestigkeit (Maximum) (VSM* 77 103) | 165,10 $Nmm^{-2}$ |
| Biegefestigkeit (Bruch) (VSM 77 103) | 141,85 $Nmm^{-2}$ |
| Durchbiegung (Maximum) (VSM 77 103) | 10,28 mm |
| Durchbiegung (Bruch) (VSM 77 103) | 15,65 mm |
| Schlagbiegefestigkeit (VSM 77 105) | 22,58 $kJ/m^2$ |
| Zugfestigkeit (Maximum) (DIN** 53 455) | 72,48 $Nmm^{-2}$ |
| Zugfestigkeit (Bruch) (DIN 53 455) | 72,48 $Nmm^{-2}$ |
| Dehnung (Maximum) (DIN 53 455) | 2,44% |
| Dehnung (Bruch) (DIN 53 455) | 2,44% |

* VSM steht für Verein Schweizerischer Maschinenindustrieller.

** DIN steht für Deutsche Industrie-Norm.

**Patentansprüche**

1. Ein Gemisch zur Herstellung von vernetzten stickstoffhaltigen Polyaddukten, dadurch gekennzeichnet, dass es

a) ein N-Cyanlactam der Formel I oder II

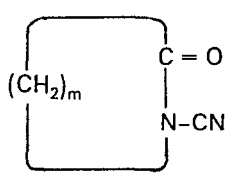

(I)

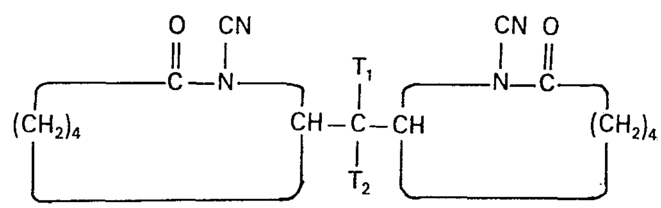

(II),

worin m eine ganze Zahl von 2 bis 11 bedeutet, die Methylen-Kohlenstoffatome gegebenenfalls durch insgesamt eine oder zwei Methyl- oder Äthyl-Gruppen substituiert sind, und $T_1$ und $T_2$ unabhängig voneinander Wasserstoff oder Methyl bedeuten, und

b) eine monomere oder oligomere organische Verbindung mit mindesens 2 C-Atomen und mindestens 2 Aminogruppen oder mit mindestens einer Amino- und einer Hydroxyl-Gruppe enthält.

2. Ein Gemisch gemäss Anspruch 1, dadurch gekennzeichnet, dass es die Komponente b) in solchen Mengen enthält, dass auf 1 Mol a) 0,2 bis 3,0 Aminäquivalente der Komponente b) fallen.

3. Ein Gemisch gemäss Anspruch 1, dadurch gekennzeichnet, dass es als Komponente a) eine Verbindung der Formel I gemäss Anspruch 1 enthält, worin m 3 bis 5 ist.

4. Ein Gemisch gemäss Anspruch 1, dadurch gekennzeichnet, dass es als Komponente a) eine Verbindung der Formel II gemäss Anspruch 1 enthält, worin $T_1$ und $T_2$ Wasserstoff sind.

5. Ein Gemisch gemäss Anspruch 1, dadurch gekennzeichnet, dass es als Komponente b) ein

Diamin der Formel III $NH_2-R_1-NH_2$, worin $R_1$ eine Gruppe $C_nH_{2n}$ ist, wobei n eine Zahl von 2 bis 12 bedeutet oder $C_5-C_7$ Cycloalkylen ist, oder eine Verbindung der Formel VIII

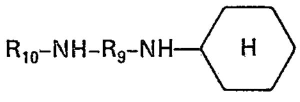 enthält, worin $R_9$ eine Gruppe

$-(CH_2)_q-$ bedeutet, wobei q eine Zahl von 2 bis 6 ist und $R_{10}$ für Wasserstoff oder Cyclohexyl steht.

6. Ein Gemisch gemäss Anspruch 1, dadurch gekennzeichnet, dass es als Komponente b) Äthylendiamin, 1,2-Diaminopropan, 1,4-Diaminobutan, 1,6-Diaminohexan, 2,2,4-Trimethylhexamethylendiamin, 4,4'-Diaminodicyclohexylmethan, N-(γ-Aminopropyl)-cyclohexylamin oder Isophorondiamin enthält.

7. Ein Gemisch gemäss Anspruch 1, dadurch gekennzeichnet, dass bis zu 30 Mol% der Aminäquivalente der Komponente b) durch c) eine Monoaminoverbindung der Formel

$R_{12}-NH-R_{13}$ oder 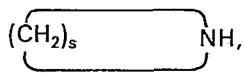

worin $R_{12}$ ein geradkettiges oder verzweigtes $C_2-C_{16}$ Alkyl, Allyl, $C_5-C_6$ Cycloalkyl, Phenyl, Benzyl oder Furfuryl ist, $R_{13}$ Wasserstoff, $C_1-C_4$ Alkyl oder Allyl bedeutet, und s eine ganze Zahl von 5 bis 7 ist, ersetzt sind.

8. Ein Gemisch gemäss Anspruch 7, dadurch gekennzeichnet, dass es die Komponenten b) und c) in solchen Mengen enthält, dass auf 1 Mol a) 0,2 bis 3,0 Aminäquivalente der Komponenten b) und c) fallen.

9. Ein Gemisch gemäss Anspruch 7, dadurch gekennzeichnet, dass es als Komponente c) n-Butylamin, Di-n-butylamin, Benzylamin, Anilin oder Toluidin enthält.

10. Vernetztes stickstoffhaltiges Polyaddukt, das dadurch erhalten wird, dass man ein Gemisch gemäss Anspruch 1 umsetzt.

## Claims

1. A mixture for the preparation of crosslinked nitrogen-containing polyadducts, which comprises

a) an N-cyanolactam of the formula I or II

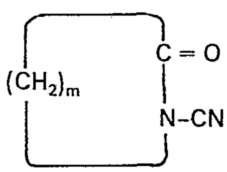

(I)

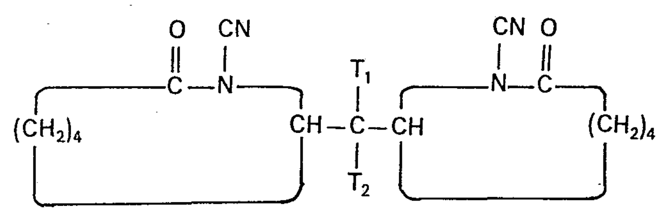

(II),

wherein m is an integer from 2 to 11, the methylene carbon atoms are unsubstituted or substituted by a total of one or two methyl or ethyl groups, and $T_1$ and $T_2$ independently of each other are hydrogen or methyl, and

b) a monomeric or oligomeric organic compound having at least 2 carbon atoms and at least 2 amino groups or having at least one amino group and one hydroxyl group.

2. A mixture according to claim 1, in which composition b) is present in such an amount that said mixture contains 0.2 to 3.0 amine equivalents of component b) per mole of a).

3. A mixture according to claim 1, wherein component a) is a compound of the formula I according to claim 1, in which m is 3 to 5.

4. A mixture according to claim 1, wherein component a) is a compound of the formula II according to claim 1, wherein each of $T_1$ and $T_2$ is hydrogen.

5. A mixture according to claim 1, wherein component b) is a diamine of the formula III $NH_2-R_1-NH_2$, wherein $R_1$ is a $C_nH_{2n}$ group, where n is a number from 2 to 12, or is $C_5-C_7$ cycloalkylene, or b) is a compound of the formula VIII

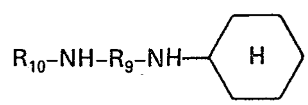

wherein $R_9$ is a $-(CH_2)_q-$group, q is a number from 2 to 6 and $R_{10}$ is hydrogen or cyclohexyl.

6. A mixture according to claim 1, wherein component b) is ethylenediamine, 1,2-diaminopropane, 1,4-diamino-butane, 1,6-diaminohexane, 2,2,4-trimethylhexamethylenediamine, 4,4'-diaminodicyclohexylmethane, N-(γ-aminopropyl)-cyclohexylamine or isophoronediamine.

7. A mixture according to claim 1, in which up to 30 mol % of the amine equivalents of component b) are replaced by c) a monoamino compound of the formula

$R_{12}-NH-R_{13}$ oder 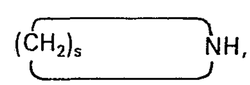

wherein $R_{12}$ is straightchain or branched $C_2-C_{16}$ alkyl, allyl, $C_5-C_6$ cycloalkyl, phenyl, benzyl or fur-

furyl, $R_{13}$ is hydrogen, $C_1$–$C_4$ alkyl or allyl and s is an integer from 5 to 7.

8. A mixture according to claim 7, in which compositions b) and c) are present in such an amount that said mixture contains 0.2 to 3.0 amine equivalents of components b) and c) per mole of a).

9. A mixture according to claim 7, wherein component c) is n-butylamine, di-n-butylamine, benzylamine, aniline or toluidine.

10. A crosslinked nitrogen-containing polyadduct, which is obtained by reacting a mixture according to claim 1.

**Revendications**

1. Mélange pour la fabrication de produits de polyaddition azotés réticulés, mélange caractérisé en ce qu'il comprend:

a) un N-cyanolactame de formule (I) ou (II) ci-dessous:

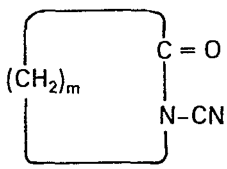

(I)

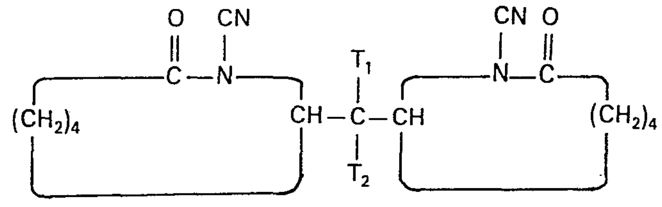

(II),

dans lesquelles m est un entier de 2 à 11, les atomes de carbone des groupes méthylène peuvent éventuellement porter au total un ou deux groupes méthyle ou éthyle, et $T_1$ et $R_2$ désignent chacun, indépendamment l'un de l'autre, l'hydrogène ou un groupe méthyle, et

b) un composé organique monomère ou oligomère ayant au moins 2 atomes de carbone et au moins deux groupes amino ou au moins un groupe amino et un hydroxyle.

2. Mélange selon la revendication 1, caractérisé en ce qu'il contient la composante (b) dans des proportions donnant 0,2 à 3,0 équivalents amino de cette composante (b) par mole de la composante (a).

3. Mélange selon la revendication 1, caractérisé en ce qu'il contient comme composante (a) un composé de formule (I) selon la revendication 1 dans lequel m est un nombre de 3 à 5.

4. Mélange selon la revendication 1, caractérisé en ce qu'il contient comme composante (a) un composé de formule (II) selon la revendication 1 dans lequel $T_1$ et $T_2$ sont chacun l'hydrogène.

5. Mélange selon la revendication 1, caractérisé en ce qu'il contient comme composante (b) une diamine de formule (III) $NH_2$-$R_1$-$NH_2$, $R_1$ étant un groupe $C_nH_{2n}$ dont n est un nombre de 2 à 12, ou un cycloalkylène en $C_5$–$C_7$, ou bien un composé de formule (VIII):

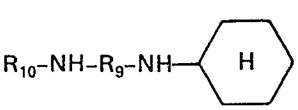

$R_9$ étant un groupe $-(CH_2)_q-$ dont q est un nombre de 2 à 6, et $R_{10}$ l'hydrogène ou un groupe cyclohexyle.

6. Mélange selon la revendication 1 caractérisé en ce qu'il contient comme composante (b) l'un des composés suivants: éthylène-diamine, 1,2-diaminopropane, 1,4-diaminobutane, 1,6-diaminohexane, 2,2,4-triméthylhexaméthylènediamine, 4,4'-diaminodicyclohexylméthane, N-(γ-aminopropyl)-cyclohexylamine ou isophoronediamine.

7. Mélange selon la revendication 1 caractérisé en ce que jusqu'à 30 moles % des équivalents amino de la composante (b) ont été remplacés par (c) un composé mono-aminé de formule:

$R_{12}$-NH-$R_{13}$ oder 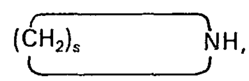

dans lesquelles $R_{12}$ est un alkyle en $C_2$–$C_{16}$ à chaîne droite ou ramifiée, un allyle, un cycloalkyle en $C_5$–$C_6$ ou un groupe phényle, benzyle ou furfuryle, $R_{13}$ désigne l'hydrogène, un alkyle en $C_1$–$C_4$ ou un allyle et s est un entier de 5 à 7.

8. Mélange selon la revendication 7, caractérisé en ce qu'il contient les composantes (b) et (c) dans des proportions donnant 0,2 à 3,0 équivalents amino de ces composantes (b) et (c) par mole de la composante (a).

9. Mélange selon la revendication 7, caractérisé en ce qu'il contient comme composante (c) la n-butylamine, la di-n-butylamine, la benzylamine, l'aniline ou la toluidine.

10. Produit de polyaddition azoté réticulé qui a été obtenu par réaction d'un mélange selon l'une quelconque des revendications précédentes.